# EUROPÄISCHE PATENTANMELDUNG

(11) **EP 3 923 221 A1**
(43) Veröffentlichungstag der Anmeldung: **15.12.2021**
(21) Anmeldenummer: 21178833.6
(22) Anmeldetag: 10.06.2021
(51) Int. Cl.: G06Q 20/20, G06Q 20/40, G07F 9/00, G07F 13/02, G07F 15/00

(54) **VERFAHREN ZUR ERMITTLUNG EINER AN EIN FAHRZEUG ABGEGEBENEN GASMENGE EINES WASSERSTOFFS BEI EINER WASSERSTOFFTANKSTELLE**

(30) Priorität: 12.06.2020 DE 102020115641
(71) Anmelder: Westenergie AG, 45128 Essen (DE)
(72) Erfinder: Gaul, Dr., Armin, 59379 Selm (DE); Kledewski, Ingo, 44319 Dortmund (DE)
(74) Vertreter: Patentanwälte Bals & Vogel

(57) **Zusammenfassung**

Die Erfindung betrifft ein Verfahren zur Ermittlung einer an ein Fahrzeug (1) abgegebenen Gasmenge eines Wasserstoffs bei einem durch einen Nutzer (2) initiierten Tankvorgang einer Wasserstofftankstelle (100),
wobei die nachfolgenden Schritte durchgeführt werden:
- Bereitstellen einer Gasabgabeinformation (230) eines Gaszählers (130) über die bei dem Tankvorgang abgegebene Gasmenge,
- Bereitstellen einer Transaktionskennung (240), welche für den initiierten Tankvorgang spezifisch ist,
- Bereitstellen einer Erfassungsinformation (270) anhand der Gasabgabeinformation (230) und der Transaktionskennung (240),
- Übertragen der bereitgestellten Erfassungsinformation (270) an eine Steuereinheit (140) der Wasserstofftankstelle (100), um die Gasabgabeinformation (230) zugeordnet zur Transaktionskennung (240) bei der Steuereinheit (140) bereitzustellen.

## Beschreibung

Die vorliegende Erfindung betrifft ein Verfahren zur Ermittlung einer an ein Fahrzeug abgegebenen Gasmenge eines Wasserstoffs. Ferner bezieht sich die Erfindung auf eine Wasserstofftankstelle sowie ein Computerprogramm zur Ausführung des Verfahrens.

Neben der Elektromobilität und der Verwendung von elektrischen Energiespeichern ist Wasserstoff einer der wichtigsten Energieträger für die zukünftige Mobilität. Zur Betankung der mithilfe von Wasserstoff angetriebenen Fahrzeuge sind Wasserstofftankstellen (auch als "H2-Tankstellen" bezeichnet) vorgesehen, die in der Lage sein müssen, neben der zuverlässigen Abgabe des Wasserstoffs an ein Fahrzeug auch die abgegebenen Gasmenge des Wasserstoffs zuverlässig zu ermitteln. Dabei kommt üblicherweise ein Gaszähler zum Einsatz, welcher die an das Fahrzeug abgegebene Menge misst und einer Steuereinheit mitteilt.

Häufig ist allerdings noch ein Nachteil, dass die Ermittlung der abgegebenen Gasmenge technisch aufwendig erfolgt.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung für eine Ermittlung einer an ein Fahrzeug abgegebenen Gasmenge eines Wasserstoffs bei einem durch einen Nutzer initiierten Tankvorgang einer Wasserstofftankstelle vorzuschlagen.

Die voranstehende Aufgabe wird gelöst durch ein Verfahren mit den Merkmalen des Anspruchs 1, durch eine Wasserstofftankstelle mit den Merkmalen des Anspruchs 17 sowie durch ein Computerprogramm mit den Merkmalen des Anspruchs 19. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Wasserstofftankstelle sowie dem erfindungsgemäßen Computerprogramm, und jeweils umgekehrt, so dass bzgl. der Offenbarung zu den einzelnen Erfindungsaspekten stets wechselseitig Bezug genommen wird bzw. werden kann.

Die Aufgabe wird insbesondere gelöst durch ein Verfahren zur Ermittlung einer an ein Fahrzeug abgegebenen Gasmenge eines Wasserstoffs, vorzugsweise bei einem durch einen Nutzer initiierten Tankvorgang einer Wasserstofftankstelle, d. h. der Gasmenge, welche bei dem Tankvorgang an das Fahrzeug abgegeben wurde.

Bei einem erfindungsgemäßen Verfahren können die nachfolgenden Schritte durchgeführt werden, vorzugsweise nacheinander in der angegebenen oder in beliebiger logischer Reihenfolge, wobei einzelne und/oder sämtliche Schritte auch wiederholt durchgeführt werden können:
- Bereitstellen einer, vorzugsweise digitalen, Gasabgabeinformation eines Gaszählers (der Wasserstofftankstelle) über die bei dem Tankvorgang abgegebene Gasmenge,
- Bereitstellen einer, vorzugsweise digitalen, Transaktionskennung, welche für den initiierten Tankvorgang spezifisch ist,
- Bereitstellen einer, vorzugsweise digitalen, Erfassungsinformation zumindest anhand der (bereitgestellten) Gasabgabeinformation und der (bereitgestellten) Transaktionskennung, wobei die Erfassungsinformation bevorzugt zumindest die Gasabgabeinformation und die Transaktionskennung umfasst,
- Übertragen der (bereitgestellten) Erfassungsinformation an eine (insbesondere elektronische) Steuereinheit der Wasserstofftankstelle, um vorzugsweise die Gasabgabeinformation zugeordnet zur Transaktionskennung bei der Steuereinheit bereitzustellen, bevorzugt um die abgegebene Gasmenge anhand der Gasabgabeinformation zu ermitteln, und/oder um die Gasabgabeinformation zugeordnet zur Transaktionskennung zur weiteren Verarbeitung an eine zentrale Datenverarbeitungsanlage außerhalb der Wasserstofftankstelle zu übertragen, um besonders bevorzugt bei der zentralen Datenverarbeitungsanlage die abgegebene Gasmenge anhand der Gasabgabeinformation zu ermitteln.

Dies hat den Vorteil, dass durch die Bereitstellung der Gasabgabeinformation und der Transaktionskennung innerhalb einer gemeinsamen Erfassungsinformation eine zuverlässige und sichere Ermittlung der Gasmenge möglich ist.

Das Fahrzeug kann als ein Kraftfahrzeug und/oder Personenkraftfahrzeug und/oder Lastkraftfahrzeug und/oder Brennstoffzellenfahrzeug ausgeführt sein, welches zumindest einen Tank für Wasserstoff aufweist. Dieser Tank kann durch den Tankvorgang entsprechend der abgegebenen Gasmenge befüllt werden. Die Wasserstofftankstelle, also eine Tankstelle zum Betanken derartiger Fahrzeuge mit Wasserstoff, kann ein oder mehrere Zapfsäulen aufweisen. Mittels der Zapfsäule kann der Energievorrat solcher Fahrzeuge, also mobiler Wasserstoffverbraucher, insbesondere Brennstoffzellenfahrzeuge, aufgefüllt werden. Für die Wasserstofftankstelle kann der flüssige oder komprimiert gasförmige Wasserstoff in Tanks bereitgehalten werden. Eine Wasserstofftankstelle kann beispielsweise Pumpen und Zapfvorrichtungen zum Anschluss an die jeweiligen Fahrzeugtanks aufweisen.

Es kann vorgesehen sein, dass der Gaszähler die Gasabgabeinformation dadurch bereitstellt, dass der Gaszähler den beim Tankvorgang durchgesetzten Gasstrom misst. Da bei der Wasserstofftankstelle die Ermittlung des beim Tankvorgang durchgesetzten Gasstromes dem Mess- und Eichgesetz unterliegen kann, können erhöhte technische Anforderungen an diese Messung gestellt sein. In anderen Worten kann zur Gewährleistung der zuverlässigen Ermittlung der Gasmenge und damit der abgegebenen Energiemenge die Wasserstofftankstelle einer Eichung unterzogen sein.

Die Erfassungsinformation kann mehrere Informationen wie die Gasabgabeinformation und die Transaktionskennung aufweisen, welche für wenigstens eine der folgenden Angaben über den Tankvorgang spezifisch sind:
- Die Menge des beim Tankvorgangs abgegebenen Wasserstoffes,
- Die Identität des Nutzers, welcher den Tankvorgang durchführt,
- Den Zeitpunkt des Tankvorgangs (z. B. Datum und/oder Uhrzeit und/oder Dauer),
- Den Standort des Tankvorgangs (z. B. den Standort der Wasserstofftankstelle).

Vorzugsweise kann die Erfassungsinformation eine Transaktionskennung aufweisen, welche für den Zeitpunkt des Tankens und/oder den Standort der Wasserstofftankstelle spezifisch ist. Damit können der Zeitpunkt und/oder der Standort dadurch in der Erfassungsinformation angegeben sein, dass die Erfassungsinformation die Transaktionskennung aufweist, welche dem Zeitpunkt und/oder dem Standort zugeordnet werden kann. Somit ist die Transaktionskennung für den initiierten Tankvorgang spezifisch. Hierzu umfasst z. B. eine zentrale Datenverarbeitungsanlage eine Tabelle zur Zuweisung dieser Angaben zur Transaktionskennung. Die Transaktionskennung kann eine fortlaufende Nummer sein, welche für jeden Tankvorgang an der spezifischen Wasserstofftankstelle eindeutig ist. Damit ist eine eindeutige Zuordnung der Erfassungsinformation und insbesondere der Gasabgabeinformation (und somit der ermittelten abgegebenen Gasmenge) zu einem bestimmten Tankvorgang möglich.

Um eine zuverlässige Ermittlung der abgegebenen Gasmenge zu ermöglichen, kann die erfindungsgemäße Wasserstofftankstelle den Gaszähler zum Messen der Menge des Wasserstoffs aufweisen. Ferner kann die Wasserstofftankstelle einen Wasserstofftank (kurz als "H2-Tank" bezeichnet) aufweisen, welcher die zur Abgabe vorgesehene Wasserstoffmenge lagert. Ebenfalls kann die Steuereinheit dafür vorgesehen sein, um den Tankvorgang einzuleiten und/oder zu beenden und/oder den Gaszähler zu überwachen und/oder anzusteuern. An der Wasserstofftankstelle kann außerdem ein Gasschlauch fest angeschlossen sein, welcher dazu ausgebildet ist, die abzugebende Menge des Wasserstoffs zu transportieren. An einem Ende des Gasschlauches kann ein Zapfventil montiert sein. Mittels des Zapfventils kann das Fahrzeug an die Wasserstofftankstelle zum Auftanken gekoppelt werden.

Die Erfassungsinformation kann eine Gasabgabeinformation über die Gasabgabe an das Fahrzeug, also insbesondere über den Gasdurchfluss und/oder über die abgegebene Gasmenge, aufweisen. Beispielsweise umfasst die Gasabgabeinformation konkret einen Wert der abgegebenen Gasmenge, wobei die Gasmenge hierbei als eine Differenz von zwei Zählerständen des Gaszählers aufgefasst werden kann. Vorzugsweise wird hierbei die Differenz eines Gasverbrauchs gemäß einem Anfangszählerstand zu Beginn des Tankvorgangs vom Gasverbrauch gemäß einem Endzählerstand zum Ende des Tankvorgangs gebildet, um auf diese Weise die abgegebene Gasmenge zu ermitteln. Auch kann die Gasabgabeinformation lediglich wenigstens einen Wert aufweisen, welcher für den Zählerstand des Gaszählers spezifisch ist.

Die Ermittlung der abgegebenen Gasmenge kann beispielsweise durch die Steuereinheit anhand der Erfassungsinformation durchgeführt werden. Hierzu können der Steuereinheit über die Erfassungsinformation z. B. aktuelle Zählerstände und/oder der Anfangs- und Endzählerstand mitgeteilt werden. Es ist allerdings auch denkbar, dass der Gaszähler und/oder das Datenübertragungssystem wie ein Gateway die Gasmenge ermittelt. Hierzu kann dem Gaszähler oder dem Gateway mitgeteilt werden, welches Zeitintervall für die Erfassung der Gasmenge relevant ist (z. B. zur Bestimmung des Anfangs- und Endzählerstands).

Das Datenübertragungssystem und/oder die Steuereinheit kann die abgegebene Gasmenge beispielsweise dadurch ermitteln, dass die vom Gaszähler bereitgestellte wenigstens eine Gasabgabeinformation (wie Zählerstände) verarbeitet werden. Hierzu können während eines Tankvorgangs auch wiederholt die Erfassungsinformationen bereitgestellt und/oder an die Steuereinheit übertragen werden, insbesondere damit die Steuereinheit wiederholt den aktuellen Zählerstand erhält.

Die Ermittlung der abgegebenen Gasmenge kann z. B. am Ende des Tankvorgangs durchgeführt werden, insbesondere erst dann, wenn alle Ventile für die Gasabgabe ans Fahrzeug (also für die Übertragung des Gasflusses) geschlossen wurden. In diesem Falle ist es besonders vorteilhaft, wenn die ermittelte Gasmenge die Gasmenge beschreibt, welche seitens des Fahrzeuges bezogen wurde.

Darüber hinaus ist es denkbar, dass eine Messung des Gasdurchflusses durch den Gaszähler durchgeführt wird, um die Gasabgabeinformation als eine Gasdurchflussinformation bereitzustellen. Die Messung des Gasdurchflusses kann dabei optional auch Übertragungsverluste berücksichtigen. Die Übertragungsverluste sind bei Wasserstofftankstellen insbesondere dadurch vorhanden, weil Wasserstoff als solches durch Materialien diffundieren kann. Zusätzlich kann es eine räumliche Distanz zwischen den zur Regelung und Steuerung des Gasflusses verwendeten Ventilen und des Gaszählers geben. Somit kann es eine Abweichung zwischen dem durch den Gaszähler gemessenen Gasdurchfluss und der am Zapfventil als Abgabepunkt zum Fahrzeug übertragenen Gasmenge geben.

Es ist denkbar, dass zum Bereitstellen der Gasabgabeinformation, vorzugsweise bei einer Messung eines Gasdurchflusses durch den Gaszähler, wenigstens ein Übertragungsverlust der Abgabe der Gasmenge berücksichtigt wird. Diese Berücksichtigung erfolgt vorzugsweise anhand zumindest eines vordefinierten, insbesondere statischen, Wertes, bevorzugt durch eine Subtraktion des statischen Wertes. Der statische Wert kann beispielsweise bei der Inbetriebnahme und/oder Eichung der Wasserstofftankstelle gemessen und vordefiniert werden. Hierzu wird der statische Wert beispielsweise in einem nicht-flüchtigen Datenspeicher der Wasserstofftankstelle gespeichert. Auf diese Weise können durch den statischen Wert die möglichen Übertragungsverluste der Wasserstofftankstelle beschrieben werden. Die Berücksichtigung der Übertragungsverluste, z. B. mittels der Subtraktion des statischen Wertes oder eines anderen Algorithmus, soll nachfolgend als Übertragungsverlustkorrektur bezeichnet werden, mit welcher eine Information über einen Gasdurchfluss korrigiert werden kann. Die Information über den Gasdurchfluss (auch Gasdurchflussinformation bezeichnet) ist beispielsweise ein Zählerstand des Gaszählers.

Es ist möglich, dass die Erfassungsinformation wenigstens eine der nachfolgenden Informationen umfasst, und vorzugsweise als ein Datensatz und/oder ein Datenpaket ausgeführt ist, welches wenigstens eine der nachfolgenden Daten umfasst:
- Die Transaktionskennung als eine Information über den initiierten Tankvorgang,
- Eine Identitätsinformation über eine festgestellte Nutzeridentität,
- Eine, gegebenenfalls mittels der Übertragungsverlustkorrektur korrigierte, Gasabgabeinformation, insbesondere Gasdurchflussinformation,
- Eine Tankstellenidentitätsinformation, vorzugsweise eine eindeutige Information über die verwendete Wasserstofftankstelle und/oder den Gaszähler, wie eine Zähler-ID.

Die Tankstellenidentitätsinformation über die verwendete Wasserstofftankstelle ist beispielsweise in einem nicht-flüchtigen Datenspeicher der Steuereinheit vorgespeichert. Ebenfalls ist es denkbar, dass die Tankstellenidentitätsinformation über die Wasserstofftankstelle eine eindeutige Gerätenummer und/oder Seriennummer des Gaszählers und/oder des Datenübertragungssystems umfasst. Auf diese Weise kann über eine Datenbank auch eine Zuordnung des Gaszählers bzw. Datenübertragungssystems mit der Wasserstofftankstelle durchgeführt werden.

Ebenfalls ist es möglich, dass die Erfassungsinformation wenigstens eine der nachfolgenden Informationen umfasst:
- eine Zeit- und/oder Datumsinformation über den Tankvorgang, um festhalten zu können, wann genau der Tankvorgang durchgeführt wurde,
- eine Tankstellenidentitätsinformation, insbesondere eine Geräteinformation über die verwendete Wasserstofftankstelle,
- eine Identitätsinformation, insbesondere eine Information über den Nutzer (wie eine RFID-Kartenkennung eines verwendeten Zahlungsmittels oder einer Identifikationsnummer des Fahrzeuges),
- eine Zustandsinformation über den Tankvorgang, insbesondere über den Gaszähler, wobei die Zustandsinformation für einen Zustand der Wasserstofftankstelle und insbesondere des Gaszählers spezifisch ist, und bevorzugt der Zustandsinformation die Gasabgabeinformation und/oder die Transaktionskennung der Erfassungsinformation zugeordnet wird.

Die Zustandsinformation kann dadurch für den Zustand der Wasserstofftankstelle spezifisch sein, dass sie ein Ergebnis einer Zustandsüberwachung umfasst, bei welcher beispielsweise ein vordefinierter Parameter bei der Wasserstofftankstelle und insbesondere des Gaszählers wie ein Druck und/oder eine Temperatur des abgegebenen Wasserstoffs überwacht wird. Hierzu erfolgt z. B. wiederholt während des Tankvorgangs eine Messung des Parameters. Es kann ein Schritt bei dem erfindungsgemäßen Verfahren vorgesehen sein, bei welchem die Zustandsinformation, insbesondere das Ergebnis, vorzugsweise ein Messwert der Messung, mit wenigstens einem vordefinierten Schwellenwert und/oder Bereich verglichen wird. Auf diese Weise kann eine Abweichung (nachfolgend auch als Anomalie bezeichnet) von diesem Bereich festgestellt werden, und beispielsweise daraufhin die zugeordnete Gasabgabeinformation als fehlerhaft gekennzeichnet werden.

Ebenfalls ist es bei dem erfindungsgemäßen Verfahren denkbar, dass der aktuelle Zustand der Wasserstofftankstelle und/oder des Fahrzeuges überwacht wird. Der aktuelle Zustand kann beispielsweise einen Druck oder eine Temperatur betreffen. Bei einer hohen Abweichung des Drucks und/oder der Temperatur kann im Rahmen der Überwachung eine Anomalie festgestellt werden. Dies ist z. B. dann der Fall, wenn die Abweichung so groß ist, dass für einen aktuellen Zustand der verwendete Gaszähler nicht geeicht oder zu ungenau ist (beispielsweise dann, wenn der Druck zu niedrig oder zu hoch ist). Wenn eine Anomalie während eines Tankvorgangs festgestellt wurde, kann dies im Rahmen der Zustandsinformationen über den Tankvorgang mitgeteilt werden. Es ist ebenso möglich, dass die Zustandsinformationen über den Tankvorgang einen zeitlichen Verlauf des Drucks und/oder der Temperatur umfassen, wobei der zeitliche Verlauf das Zeitintervall während des Tankvorgangs betrifft.

Darüber hinaus kann es vorgesehen sein, dass die Wasserstofftankstelle wenigstens eine (z. B. mechanische und/oder datenverarbeitungsmäßige) Vorkehrung aufweist, um eine Manipulation der Erfassungsinformation zuverlässig zu verhindern. Nachfolgend werden Beispiele für derartige Vorkehrungen beschrieben.

Es kann optional bei einem erfindungsgemäßen Verfahren der nachfolgende Schritt durchgeführt werden:
- Erstellen eines (z. B. digitalen) Sicherheitsmerkmales, insbesondere einer digitalen Signatur, zumindest anhand der Gasabgabeinformation und/oder der Transaktionskennung, insbesondere anhand der vollständigen Erfassungsinformation, bevorzugt um zumindest die Gasabgabeinformation oder die gesamte Erfassungsinformation durch das Sicherheitsmerkmal gesichert, insbesondere signiert, bei der Steuereinheit bereitzustellen.

In anderen Worten kann ein Sicherheitsmerkmal wie eine (digitale) Signatur anhand der Erfassungsinformation generiert werden. Dies kann beispielsweise mittels eines kryptografischen Verfahrens erfolgen, um das Sicherheitsmerkmal in der Form wenigstens eines Wertes zur Erfassungsinformation zu berechnen, welcher die Prüfung der (zumindest teilweisen) Erfassungsinformation ermöglicht. Es kann möglich sein, dass das Sicherheitsmerkmal zur Prüfung der Erfassungsinformation geeignet ist und/oder dass beim erfindungsgemäßen Verfahren die Prüfung der Erfassungsinformation anhand des Sicherheitsmerkmals durchgeführt wird. Diese Prüfung umfasst vorteilhafterweise die Prüfung der Integrität der Erfassungsinformation. Darunter ist zu verstehen, dass z. B. ein korrekter und/oder unmodifizierter Zustand der Erfassungsinformation und/oder eine korrekte Zuordnung der Gasabgabeinformation zur Transaktionskennung und/oder umgekehrt geprüft wird. Darunter wird somit auch die Sicherung bzw. Absicherung der Erfassungsinformation mittels des Sicherheitsmerkmals verstanden.

Es ist möglich, dass der Gaszähler ein Computerprogramm aufweist, um eine Gasabgabeinformation, d. h. insbesondere eine Angabe über die Gasabgabe, zu generieren. Diese Angabe ist beispielsweise eine Gasdurchflussinformation, insbesondere ein aktueller Zählerstand, des Gaszählers. Dabei kann es möglich sein, dass das Computerprogramm vollständig oder zumindest hinsichtlich der Generierung dieser Gasabgabeinformation manipulationsgeschützt und bevorzugt unveränderbar ist. Daher kann es auch verhindert sein, dass der Gaszähler dahingehend erweitert wird, dass der Gaszähler selbst die Erfassungsinformation und/oder das Sicherheitsmerkmal erstellt. Somit kann es erforderlich sein, dass das Datenübertragungssystem die Erfassungsinformation und/oder das Sicherheitsmerkmal zumindest teilweise anhand der Gasabgabeinformation erstellt. Diese Erstellung kann beispielsweise direkt erfolgen, nachdem der Gaszähler die Gasabgabeinformation an das Datenübertragungssystem ausgegeben hat, also noch bevor sie durch die Steuereinheit empfangen wird. Alternativ kann der Gaszähler bereits dazu geeignet sein, die Erfassungsinformation zu erstellen und/oder das Sicherheitsmerkmal zu erstellen und der Gasabgabeinformation bei der Ausgabe an das Datenübertragungssystem beizufügen.

Es kann möglich sein, dass ein Sicherheitsmerkmal, insbesondere eine digitale Signatur, für wenigstens eine der folgenden Angaben (insbesondere Daten) in der Erfassungsinformation generiert wird:
- Die Transaktionskennung, welche für den initiierten Tankvorgang spezifisch ist,
- Die Identitätsinformation über den Nutzer, wie eine Kunden-ID,
- Eine Tankstellenidentitätsinformation über die Wasserstofftankstelle und/oder den Gaszähler, wie eine Zähler-ID,
- Die Gasabgabeinformation in der Form wenigstens eines Messwerts eines gemessenen Gasdurchsatz, insbesondere einen Zählerstand und/oder eine Gasmenge des Gaszählers.

Auch ist es optional denkbar, dass das Erstellen des Sicherheitsmerkmals durch ein digitales Signieren zumindest der Gasabgabeinformation und der Transaktionskennung, und insbesondere der vollständigen Erfassungsinformation, durchgeführt wird, vorzugsweise um das Sicherheitsmerkmal in der Form einer digitalen und/oder elektronischen Signatur zur Erfassungsinformation zu erstellen, insbesondere zu berechnen. Die Signatur dient insbesondere dazu, dass mögliche Verfälschungen seitens eines Dritten festgestellt werden können. Die berechnete Signatur kann beispielsweise eine RSA- oder ECDSA Signatur sein.

Ferner kann im Rahmen der Erfindung die Erstellung des Sicherheitsmerkmals, insbesondere der digitalen Signatur, durch eine Verwendung eines asymmetrischen Kryptosystems erfolgen. Konkret kann darunter die Signierung der Erfassungsinformation mittels eines digitalen Signaturverfahrens verstanden werden. Damit ist es möglich, mit Hilfe eines geheimen Signaturschlüssels (dem Private Key) zu einer digitalen Nachricht (d. h. zu der Erfassungsinformation oder zumindest der Gasabgabeinformation und der Transaktionskennung) das Sicherheitsmerkmal als einen Wert zu berechnen, der ebenfalls digitale Signatur genannt wird. Dieser Wert ermöglicht es jedem, mit Hilfe eines öffentlichen Verifikationsschlüssels (dem Public Key) die nichtabstreitbare Urheberschaft und Integrität der Nachricht zu prüfen.

Darüber hinaus ist es denkbar, dass das Signaturverfahren oder auch andere Verfahren zur Erstellung des Sicherheitsmerkmals zum Einsatz kommen, bei welchen anschließend das Sicherheitsmerkmal zur Überprüfung dienen kann, dass zumindest die Gasabgabeinformation und die Transaktionskennung korrekt sind (also z. B. jeweils für sich inhaltlich korrekt sind und/oder korrekt einander zugeordnet sind).

Unter einer Zuordnung der Gasabgabeinformation zur Transaktionskennung und/oder umgekehrt wird insbesondere verstanden, dass (z. B. bei einer späteren Datenverarbeitung) erkennbar ist, zu welcher Transaktionskennung die Gasabgabeinformation in der Erfassungsinformation bereitgestellt wurde. Konkret kann die Zuordnung beispielsweise dadurch erreicht werden, dass die Transaktionskennung und die Gasabgabeinformation in einem gemeinsamen Datensatz bzw. in der gemeinsamen Erfassungsinformation gespeichert werden. Auch ist es möglich, dass die Gasabgabeinformation einen Verweis auf die Transaktionskennung und/oder umgekehrt aufweist. Somit ist auch eine eindeutige Zuordnung der Gasabgabeinformation und der Transaktionskennung zu einem bestimmten Tankvorgang möglich.

Es kann möglich sein, dass die Erstellung der digitalen und/oder elektronischen Signatur unmittelbar nach der Bereitstellung, insbesondere Erstellung, der Erfassungsinformation durchgeführt wird. Die Erstellung der Signatur kann beispielsweise innerhalb der Steuereinheit der Wasserstofftankstelle oder im Gaszähler selbst oder im Datenübertragungssystem durchgeführt werden.

Weiter kann in einem abschließenden Schritt des erfindungsgemäßen Verfahrens die erstellte Signatur mitsamt der Erfassungsinformation an eine weitere Komponente übertragen werden. Die weitere Komponente ist beispielsweise das Fahrzeug oder eine zentrale Datenverarbeitungsanlage wie ein Server, welcher außerhalb der Wasserstofftankstelle vorgesehen ist. Die Übertragung kann beispielsweise nach Beendigung des Tankvorgangs automatisch erfolgen. Auch kann es möglich sein, dass die Übertragung durch die weitere Komponente angefordert oder abgerufen wird. Bis zur Übertragung kann ferner die Signatur mitsamt der Erfassungsinformation in der Wasserstofftankstelle zwischengespeichert werden.

Auch kann es möglich sein, dass in einem alternativen abschließenden Schritt des erfindungsgemäßen Verfahrens die erstellte Signatur und/oder die zugehörige Erfassungsinformation in einem nicht-flüchtigen Speicher der Wasserstofftankstelle, insbesondere in der Steuereinheit, abgespeichert wird.

Nach einer weiteren Möglichkeit kann vorgesehen sein, dass das Sicherheitsmerkmal vor dem Übertragen an die Steuereinheit erstellt wird, vorzugsweise um das Sicherheitsmerkmal zusammen mit der Erfassungsinformation an die Steuereinheit zu übertragen, um zumindest die Gasabgabeinformation (oder auch die gesamte Erfassungsinformation) durch das Sicherheitsmerkmal gesichert, insbesondere signiert, vom Gaszähler an die Steuereinheit zu übertragen. Damit kann gewährleistet und nach der Übertragung geprüft werden, dass es zu keiner Manipulation der Erfassungsinformation gekommen ist.

Beispielsweise kann es vorgesehen sein, dass das Übertragen der Erfassungsinformation durch ein Datenübertragungssystem durchgeführt wird, wobei insbesondere das Erstellen des Sicherheitsmerkmals durch das Datenübertragungssystem außerhalb des Gaszählers erfolgt. Damit ist es möglich, dass die Gasabgabeinformation auch dann durch das Sicherheitsmerkmal abgesichert werden kann, wenn der Gaszähler hierzu nicht anpassbar ausgeführt ist. Beispielsweise weist der Gaszähler eine Schnittstelle zum bzw. als Teil des Datenübertragungssystems auf, um die Gasabgabeinformation für das Übertragen auszugeben. Dann ist es möglich, dass das Sicherheitsmerkmal durch das Datenübertragungssystem - allerdings außerhalb der Schnittstelle und des Gaszählers - erstellt wird. Beispielsweise sind für das Übertragen mehrere Übertragungskomponenten des Datenübertragungssystems, allerdings außerhalb des Gaszählers, vorgesehen. Die Übertragungskomponenten können somit zur Ausbildung des Datenübertragungssystems als ein Gateway dienen. In diesem Fall kann wenigstens eine der Übertragungskomponenten die Erstellung des Sicherheitsmerkmals anhand der ausgegebenen Gasabgabeinformation durchführen.

Das Datenübertragungssystem kann beispielsweise als ein Gateway ausgeführt sein. Vorteilhafterweise kann das Datenübertragungssystem wenigstens eine Übertragungskomponente, vorzugsweise mit einer Funkübertragungsschnittstelle, aufweisen. Die Übertragungskomponente ist beispielsweise zur Datenübertragung mittels LTE (Long Term Evolution) oder mittels Powerline oder mittels Glasfaser oder mittels Kupferkabel ausgeführt. Unter Powerline (auch PowerLAN) kann eine Technologie verstanden werden, um vorhandene elektrische Leitungen im Niederspannungsnetz zum Aufbau eines lokalen Netzwerks zur Datenübertragung zu nutzen, so dass keine zusätzliche Verkabelung notwendig ist.

Es kann vorgesehen sein, dass die Wasserstofftankstelle mechanische Sicherheitsvorkehrungen umfasst, um eine Manipulation der Erfassungsinformation zu verhindern. Hierzu ist beispielsweise ein abgeschlossenes Gehäuse zumindest des Datenübertragungssystems vorgesehen, sodass ein mechanischer Zugang an die elektrischen Leitungen und/oder an die Übertragungskomponenten und/oder an die Elektronik des Datenübertragungssystems mechanisch blockiert ist. Unter der mechanischen Blockierung wird insbesondere die Blockierung durch mechanische Komponenten verstanden, welche eine größere Härte und/oder Stabilität aufweisen, als beispielsweise eine elektrische Isolierung der Leitungen. Insbesondere kann hierzu das Gehäuse wenigstens ein Metallelement aufweisen, welches nur zum Schutz vor Manipulationen am Datenübertragungssystem vorgesehen ist.

Es kann möglich sein, dass ein Datenübertragungssystem vorgesehen ist, um das Übertragen in der Form einer Datenübertragung zwischen dem Gaszähler und der Steuereinheit bereitzustellen. Das Datenübertragungssystem umfasst hierzu z. B. wenigstens oder genau eine Datenleitung. Der Gaszähler und die Steuereinheit umfassen beispielsweise jeweils eine elektronische Schnittstelle, welche mit der Datenleitung zur Datenübertragung elektrisch direkt verbunden sind. Die beiden Schnittstellen können die einzigen elektronischen Komponenten für die Übertragung bzw. des Datenübertragungssystems sein, und somit die Datenleitung lediglich als wenigstens ein elektrisches Kabel oder dergleichen ausgeführt sein. Allerdings kann es auch vorgesehen sein, dass das Datenübertragungssystem als ein Gateway ausgeführt ist, d. h. auch weitere elektronische Übertragungskomponenten außerhalb der Steuereinheit und des Gaszählers zur Datenübertragung aufweist.

Über das Datenübertragungssystem, und insbesondere über die wenigstens oder genau eine Datenleitung, kann die Gasabgabeinformation z. B. in der Form einer Zählerstandsinformation vom Gaszähler an die Steuereinheit aktiv übermittelt werden. Alternativ oder zusätzlich kann die Steuereinheit auch die Zählerstandsinformation vom Gaszähler anfordern.

Ferner kann bei dem Übertragen der bereitgestellten Erfassungsinformation eine Fehlererkennung eines Übertragungsfehlers durchgeführt werden. In anderen Worten kann die Übertragung der Erfassungsinformation mittels wenigstens eines Fehlerdetektionsalgorithmus abgesichert sein, um eine Verfälschung der Erfassungsinformation festzustellen. Der Fehlerdetektionsalgorithmus verwendet hierzu beispielsweise eine CRC, d. h. eine zyklische Redundanzprüfung, und/oder ein asymmetrisches kryptographisches Verfahren wie RSA und/oder ein Digital Signature Algorithm (DSA) und/oder Elliptic Curve Digital Signature Algorithm (ECDSA).

Wenn das Datenübertragungssystem als ein Gateway ausgeführt ist, kann die Steuereinheit der Wasserstofftankstelle auch über wenigstens eine weitere elektronische Übertragungskomponente mit dem Gaszähler kommunikationstechnisch verbunden sein. Die weitere elektronische Übertragungskomponente kann wiederrum über eine Datenleitung mit dem Gaszähler kommunikationstechnisch verbunden sein. Auch die Datenkommunikation über diese Datenleitungen kann mittels eines vorgenannten Fehlerdetektionsalgorithmus abgesichert werden. Der Vorteil dieses Aufbaus ist, dass die Komplexität des Gaszählers reduziert werden kann, da mögliche Kommunikationsschnittstellen mit weiteren Übertragungskomponenten mittels des Gateways behandelt werden können. Beispielsweise können das Gateway und der Gaszähler Teil einer sogenannten Messkapsel sein.

Vorteilhaft ist es zudem, wenn das Bereitstellen der Transaktionskennung und/oder das Bereitstellen der Erfassungsinformation und/oder das Erstellen des Sicherheitsmerkmals durch den Gaszähler durchgeführt wird. Hierzu weist der Gaszähler z. B. ein Computerprogramm und/oder eine Verarbeitungsvorrichtung wie einen Prozessor auf, welcher das Computerprogramm durchführt. Anschließend kann die Erfassungsinformation mit dem Sicherheitsmerkmal am Datenübertragungssystem zum Übertragen ausgegeben werden.

Es kann im Rahmen der Erfindung vorgesehen sein, dass das Bereitstellen der Transaktionskennung und/oder das Bereitstellen der Erfassungsinformation und/oder das Erstellen des Sicherheitsmerkmals durch die Steuereinheit durchgeführt wird. Beispielsweise ist es hierzu denkbar, dass die Steuereinheit die über das Datenübertragungssystem empfangene Erfassungsinformation durch das Sicherheitsmerkmal absichert, um bei einer weiteren Übertragung an eine zentrale Datenverarbeitungsanlage die Unverfälschtheit der Erfassungsinformation zu gewährleisten.

Es ist ferner denkbar, dass zum Bereitstellen der Transaktionskennung die Transaktionskennung, insbesondere pseudozufällig, anhand der Initiierung des Tankvorgangs generiert wird. Auf diese Weise wird die Transaktionskennung für den initiierten Tankvorgang spezifisch bereitgestellt. Konkret kann dies bedeuten, dass die Transaktionskennung anhand wenigstens einer Eingabeinformation über den initiierten Tankvorgang und/oder über die Initiierung selbst generiert wird. Beispielsweise kann die Transaktionskennung durch eine Verarbeitung einer Eingabeinformation wie wenigstens einer Nummer generiert werden, wobei die wenigstens eine Nummer z. B. eine eindeutige Kennzahl wie die Seriennummer der Wasserstofftankstelle oder des Gaszählers oder eines Identifizierungsmittels sind. Ebenfalls kann die Eingabeinformation als eine Eingabe für einen Algorithmus wie eine Hashfunktion oder einen Zufallsgenerator oder dergleichen verwendet werden, um die Ausgabe des Algorithmus als die Transaktionskennung zu verwenden. Die Eingabeinformation umfasst z. B. eine Zeitinformation und/oder eine Identitätsinformation und/oder eine Tankstellenidentitätsinformation, wie nachfolgend noch näher beschrieben wird.

Ebenfalls ist es möglich, dass zum Bereitstellen der Transaktionskennung der nachfolgende Schritt durchgeführt wird, um die Transaktionskennung anhand der (und spezifisch für) Initiierung des Tankvorgangs zu generieren:
- Erstellen der Transaktionskennung bei oder nach der Initiierung des Tankvorgangs zumindest anhand eines Initiierungsmittels zur Initiierung des Tankvorgangs und/oder einer Zeitinformation über den Tankvorgang und/oder einer Tankstellenidentitätsinformation wie eine Geräteinformation über die Wasserstofftankstelle.
Auf diese Weise kann anhand der Transaktionskennung die Gasabgabeinformation eindeutig dem Tankvorgang zugeordnet werden.

Die Tankstellenidentitätsinformation und insbesondere die Geräteinformation kann dazu ausgeführt sein, die Wasserstofftankstelle eindeutig zu identifizieren. Beispielsweise kann die Geräteinformation als eine Seriennummer des Gaszählers oder der Steuereinheit ausgeführt sein. Somit kann die Geräteinformation durch die Wasserstofftankstelle, insbesondere die Steuereinheit oder den Gaszähler, bereitgestellt werden.

Außerdem ist es möglich, dass das Initiierungsmittel durch den Nutzer dazu verwendet wird, den Tankvorgang zu initiieren, wobei das Initiierungsmittel als ein Authentifizierungsmittel und/oder ein, insbesondere elektronisches, Zahlungsmittel ausgebildet sein kann. Das Initiierungsmittel, vorzugsweise das Zahlungsmittel, kann beispielsweise als eine Karte für den bargeldlosen Zahlungsverkehr, wie eine EC-Karte (d. h. Girocard) oder Kreditkarte, oder als eine Gutscheinkarte mit einer eindeutigen Gutschein-ID oder als eine Kennung des Fahrzeuges (wie ein Kennzeichen des Fahrzeuges) oder eines mobilen Geräts (wie ein Smartphone, z. B. einer kontaktlosen, z. B. RFID- oder NFC-Schnittstelle) ausgeführt sein. Somit ist das Initiierungsmittel ein Mittel, welches die Initiierung des Tankvorgangs auslösen kann. Daher kann das Initiierungsmittel auch als ein Authentifizierungsmittel ausgebildet sein, welches zur Authentifizierung des Nutzers und/oder zur Bereitstellung einer Identitätsinformation verwendet wird.

Ebenfalls ist es optional bei dem erfindungsgemäßen Verfahren vorgesehen, dass die Zeitinformation als ein Zeitstempel des Tankvorgangs ausgeführt ist, welcher bei oder nach der Initiierung des Tankvorgangs festgelegt wird, und/oder dass die Tankstellenidentitätsinformation eine Information zur Identifizierung der Wasserstofftankstelle umfasst. Die Zeitinformation ist beispielsweise eine Uhrzeit und/oder ein Datum der Initiierung des Tankvorgangs. Die Zeitinformation kann z. B. durch einen Zeitgeber der Wasserstofftankstelle bereitgestellt werden. Damit kann anhand der Zeitinformation nachvollzogen werden, wann der Tankvorgang durchgeführt worden ist. Gemäß einer weiteren Möglichkeit kann vorgesehen sein, dass der Tankvorgang dadurch von dem Nutzer initiiert wird, dass das Initiierungsmittel durch den Nutzer an der Wasserstofftankstelle bereitgestellt wird, z. B. an einer Transaktionsvorrichtung der Wasserstofftankstelle vorgehalten wird, und/oder das bereitgestellte Initiierungsmittel von der Wasserstofftankstelle, insbesondere der Transaktionsvorrichtung, erfasst wird, um die Transaktionskennung zu erstellen. Hierzu kann die Transaktionsvorrichtung z. B. als eine kontaktlose Schnittstelle, wie eine NFC-Schnittstelle, oder eine Kamera ausgeführt sein. Das Initiierungsmittel kann entsprechend ebenfalls eine kontaktlose Schnittstelle oder eine visuelle Information wie ein Kennzeichen oder einen Barcode aufweisen. Über diese Schnittstelle bzw. die visuelle Information kann beispielsweise die Identitätsinformation an die Transaktionsvorrichtung übertragen werden, um die Identitätsinformation durch die Wasserstofftankstelle auszuwerten und als Ergebnis die Transaktionskennung zu erzeugen.

Es kann optional möglich sein, dass zum Bereitstellen der Transaktionskennung der nachfolgende Schritt durchgeführt wird:
- Erstellen der Transaktionskennung, insbesondere bei der Initiierung des Tankvorgangs, zumindest anhand eines Initiierungsmittels, vorzugsweise eines Zahlungsmittels, für den Tankvorgang und/oder einer Zeitinformation über den Tankvorgang und/oder einer Tankstellenidentitätsinformation wie eine Geräteinformation über die Wasserstofftankstelle.

Zum Bereitstellen der Identitätsinformation kann optional der nachfolgende Schritt durchgeführt werden:
- Durchführen einer Authentifizierung des Nutzers, wobei die Identitätsinformation anhand eines Authentifizierungsmittels ermittelt wird.

Zum Tanken, also zur Durchführung des Tankvorgangs, kann die Bekanntmachung des Initiierungsmittels bei der Wasserstofftankstelle, vorzugsweise in der Form einer Authentifizierung mittels des Authentifizierungsmittels, notwendig sein. Das Authentifizierungsmittel kann über eine Elektronik verfügen, welche z. B. die Authentifizierung mittels einer Funk- und/oder kontaktlosen Technologie wie NFC (d. h. Near Field Communication) oder RFID (d. h. Radio Frequency Identification) ermöglicht.

Ferner kann es im Rahmen der Erfindung vorgesehen sein, dass die nachfolgenden Schritte durchgeführt werden:
- Übertragen einer Identitätsinformation von einem Authentifizierungsmittel an die Wasserstofftankstelle, insbesondere an die Steuereinheit und/oder den Gaszähler, wenn der Tankvorgang durch den Nutzer initiiert wird,
- Auswerten der übertragenen Identitätsinformation, um eine Authentifizierung des Nutzers durchzuführen,
- Einleiten des Tankvorgangs in Abhängigkeit von der Authentifizierung, insbesondere wenn die Authentifizierung erfolgreich ist und/oder festgestellt wird, dass der Nutzer zu einer Gruppe berechtigter Nutzer gehört.
Somit kann es vorgesehen sein, dass der Tankvorgang nur dann freigegeben wird, wenn der Nutzer dazu autorisiert ist.

Weiter ist im Rahmen der Erfindung denkbar, dass das Authentifizierungsmittel als wenigstens eine der nachfolgenden Mittel ausgeführt ist:
- Eine Karte mit einer elektronischen Authentifizierungsschnittstelle, insbesondere eine Karte zum Bezahlen der abgegebenen Gasmenge, vorzugsweise um die Identitätsinformation als ein Merkmal und/oder eine Kennzahl oder dergleichen der Karte bereitzustellen,
- Ein mobiles Gerät mit einer elektronischen Authentifizierungsschnittstelle, insbesondere ein Smartphone, insbesondere um einen eindeutigen Identifikationswert des Geräts als Identitätsinformation bereitzustellen,
- Ein Teil des Fahrzeuges, insbesondere ein Kennzeichen, um vorzugsweise die Identitätsinformation als eine visuelle Information bereitzustellen.

Dabei kann die Authentifizierungsschnittstelle ein Übertragen der Identitätsinformation an die Wasserstofftankstelle durchführen, z. B. konktaktlos, sodass die Authentifizierungsschnittstelle als eine kontaktlose Datenübertragungsschnittstelle ausgebildet sein kann. Dies ermöglicht es, eine flexible und vielseitige Authentifizierung bereitzustellen. Zur Bereitstellung der Identitätsinformation kann die Wasserstofftankstelle beispielsweise eine Kamera aufweisen, um das Kennzeichen am Fahrzeug aufzunehmen, und/oder eine Gegenschnittstelle zur Authentifizierungsschnittstelle aufweisen, um die Übertragung mittels der gleichen Technologie der Authentifizierungsschnittstelle durchzuführen. Die Identitätsinformation kann zur Bereitstellung der Transaktionskennung genutzt werden. Die Kamera und/oder die Gegenschnittstelle können entsprechend als eine Transaktionsvorrichtung der Wasserstofftankstelle bezeichnet werden.

Des Weiteren ist es denkbar, dass der Tankvorgang dadurch von dem Nutzer initiiert wird, dass der Nutzer an der Wasserstofftankstelle eine Authentifizierung einleitet, um die Identitätsinformation bereitzustellen. Es kann somit vorgesehen sein, dass vor der Abgabe des Wasserstoffes zur Initiierung des Tankvorgangs eine Authentifizierung durchgeführt wird. Die Feststellung einer Identität eines Nutzers der Wasserstofftankstelle (d. h. die Nutzeridentität) kann aus Sicherheitsgründen zum Tanken notwendig sein, um eine unberechtigte Gasentnahme zu verhindern. Die Authentifizierung ermöglicht in anderen Worten die Feststellung, wer sein Fahrzeug an der Wasserstofftankstelle auftanken möchte. Anhand dieser Identitätsinformation kann dann die Transaktionskennung erstellt werden.

Die Transaktionskennung kann optional anhand der Authentifizierung und vorzugsweise anhand eines Authentifizierungsmittels bereitgestellt, insbesondere erstellt, werden. Dies ermöglicht es, die Transaktionskennung so auszuführen, dass sie eindeutig ist und dem jeweiligen Tankvorgang eindeutig zugeordnet werden kann. Daher kann die Transaktionskennung ferner bereitgestellt, insbesondere erstellt, werden anhand wenigstens eine der nachfolgenden Eingabeinformationen:
- Einer Identitätsinformation des Authentifizierungsmittels, wie eine Seriennummer oder eine Nutzer-ID,
- einer (aktuellen) Zeitinformation, z. B. eines Zeitpunkts (Datum- und/oder Uhrzeit) des initiierten Tankvorgangs,
- Eine Tankstellenidentitätsinformation wie eine Geräteinformation über die Wasserstofftankstelle, wie eine Seriennummer des Gaszählers oder der Steuereinheit.

Die Transaktionskennung kann beispielsweise bei oder nach Initiierung des Tankvorgangs erstellt werden und/oder nach der Erstellung der Steuereinheit und/oder weiterer Komponenten der Wasserstofftankstelle mitgeteilt werden.

Das Authentifizierungsmittel ist z. B. als ein Personaldokument (z. B. Personalausweis) und/oder eine Karte wie eine Tankkarte und/oder ein Initiierungsmittel (wie ein Zahlungsmittel, z. B. eine Kreditkarte oder eine Bezahlkarte oder ein Gutschein oder eine RFID-Karte) und/oder ein Computerprogramm z. B. eines Smartphones und/oder eine (eindeutigen) Kennung des Fahrzeuges ausgebildet. Das Computerprogramm ist beispielsweise eine Smartphone-App, welche z. B. mittels einer kontaktlosen Datenübertragung (z. B. mittels der NFC-Schnittstelle des Smartphones) die Authentifizierung durchführt. Weiter kann die Authentifizierung optional auch anhand des aufzutankenden Fahrzeuges erfolgen. Entsprechend kann das Authentifizierungsmittel auch Teil des Fahrzeuges sein, wie ein Kennzeichen des Fahrzeuges. Weiter kann die Authentifizierung optional als eine Kredit- oder EC-Karte ausgebildet sein.

Zur Authentifizierung kann es vorgesehen sein, dass der Nutzer der Wasserstofftankstelle seine Identität über das Authentifizierungsmittel mitteilt. Hierzu wird beispielsweise das Authentifizierungsmittel über eine Kamera der Wasserstofftankstelle aufgezeichnet oder per kontaktloser, und insbesondere Funkübertragung, ausgewertet.

Zur Mitteilung der Nutzeridentität kann beispielsweise eine Identitätsinformation von einem Authentifizierungsmittel an die Wasserstofftankstelle übertragen werden. Das Authentifizierungsmittel kann zu diesem Zweck die Identitätsinformation beispielsweise optisch darstellen (z. B. in der Form eines KFZ-Kennzeichens oder eines Barcodes) und/oder kontaktlos und insbesondere über Funk an die Wasserstofftankstelle zu übertragen.

Die Wasserstofftankstelle oder eine externe Vorrichtung außerhalb der Wasserstofftankstelle kann für den kontaktlosen Empfang der Identitätsinformation eine Transaktionsvorrichtung, z. B. eine Kommunikationsschnittstelle wie eine NFC- oder sonstige Funkschnittstelle aufweisen. Die kontaktlose Übertragung ist beispielsweise als eine Übertragung mittels einer RFID- (engl. radio-frequency identification) oder NFC (engl. near field communication) ausgeführt. Die Identitätsinformation kann von dem Authentifizierungsmittel an die Transaktionsvorrichtung übertragen werden, und anschließend von der Steuereinheit oder einer weiteren Komponente der Wasserstofftankstelle und/oder einer externen Vorrichtung außerhalb der Wasserstofftankstelle empfangen und/oder ausgewertet werden.

Außerdem ist es von Vorteil, wenn die Gasabgabeinformation wenigstens eine der nachfolgenden Informationen umfasst:
- Einen Zählerstand des Gaszählers,
- Einen Anfangszählerstand des Gaszählers zu Beginn des Tankvorgangs,
- Einen Endzählerstand des Gaszählers am Ende des Tankvorgangs,
- Die an das Fahrzeug während des Tankvorgangs abgegebene Gasmenge.

Somit ist es möglich, anhand der Gasabgabeinformation zuverlässig die abgegebene Gasmenge zu ermitteln. Dazu kann ein einmaliges Übertragen der Erfassungsinformation mit der Gasabgabeinformation ausreichend sein (beispielsweise, wenn direkt die abgegebene Gasmenge z. B. als Differenz von End- und Anfangszählerstand als Gasabgabeinformation am Ende des Tankvorgangs übertragen wird), oder auch ein mehrfaches Übertragen erforderlich sein (z. B., wenn nur der zum Zeitpunkt des Übertragens aktuelle Zählerstand als Gasabgabeinformation übermittelt wird).

Es kann weiter möglich sein, dass die Steuereinheit die übertragene Erfassungsinformation, insbesondere zusammen mit einem Sicherheitsmerkmal, an eine zentrale Datenverarbeitungsanlage außerhalb der Wasserstofftankstelle übermittelt, vorzugsweise um die Gasabgabeinformation zugeordnet zur Transaktionskennung, insbesondere gesichert durch das Sicherheitsmerkmal, an der zentralen Datenverarbeitungsanlage zu hinterlegen. Die Übermittlung kann beispielsweise über eine Datenverbindung wie eine Funkverbindung und/oder über ein Netzwerk wie das Internet erfolgen. Die zentrale Datenverarbeitungsanlage ist beispielsweise als ein Server ausgeführt, welcher eine Datenverbindung mit mehreren Wasserstofftankstellen aufweist. Auf diese Weise können die Erfassungsinformationen und/oder die Gasabgabeinformationen von verschiedenen Wasserstofftankstellen zentral in der zentralen Datenverarbeitungsanlage gespeichert werden.

Ebenfalls Gegenstand der Erfindung ist eine Wasserstofftankstelle (insbesondere im Sinne eines Systems) zur Abgabe eines Wasserstoffs an ein Fahrzeug bei einem durch einen Nutzer initiierten Tankvorgang, umfassend:
- Einen Gaszähler zum Bereitstellen einer Gasabgabeinformation über die bei dem Tankvorgang abgegebene Gasmenge des Wasserstoffs,
- Eine (insbesondere elektronische) Transaktionsvorrichtung zum Bereitstellen einer Transaktionskennung, welche für den initiierten Tankvorgang spezifisch ist,
- Eine (insbesondere elektronische) Verarbeitungsvorrichtung wie ein Mikrocontroller oder ein Computer zum Bereitstellen einer Erfassungsinformation anhand der Gasabgabeinformation und der Transaktionskennung,
- Ein Datenübertragungssystem und/oder wenigstens eine Schnittstelle zum Datenübertragungssystem zum Übertragen der bereitgestellten Erfassungsinformation an eine Steuereinheit der Wasserstofftankstelle, um die Gasabgabeinformation zugeordnet zur Transaktionskennung bei der Steuereinheit bereitzustellen.

Damit bringt die erfindungsgemäße Wasserstofftankstelle die gleichen Vorteile mit sich, wie sie ausführlich mit Bezug auf ein erfindungsgemäßes Verfahren beschrieben sind. Zudem kann die Wasserstofftankstelle geeignet sein, ein erfindungsgemäßes Verfahren auszuführen.

Ebenfalls Gegenstand der Erfindung ist ein Computerprogramm, vorzugsweise Computerprogrammprodukt, umfassend Befehle, die bei einer Ausführung des Computerprogramms durch eine Verarbeitungsvorrichtung einer Wasserstofftankstelle die Wasserstofftankstelle veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben sind. Zudem kann das Computerprogramm in einem nicht-flüchtigen Speicher einer erfindungsgemäßen Wasserstofftankstelle gespeichert sein, um durch die Verarbeitungsvorrichtung ausgelesen zu werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: eine beispielhafte Ausbildung einer erfindungsgemäßen Wasserstofftankstelle und eines Fahrzeuges zur Visualisierung eines erfindungsgemäßen Verfahrens,
- Fig. 2: Teile einer erfindungsgemäßen Wasserstofftankstelle,
- Fig. 3: eine Erfassungsinformation eines erfindungsgemäßen Verfahrens und
- Fig. 4: einen beispielhaften Verlauf eines physikalischen Drucks während des Tankvorgangs.

In den nachfolgenden Figuren werden für die gleichen technischen Merkmale auch von unterschiedlichen Ausführungsbeispielen die identischen Bezugszeichen verwendet.

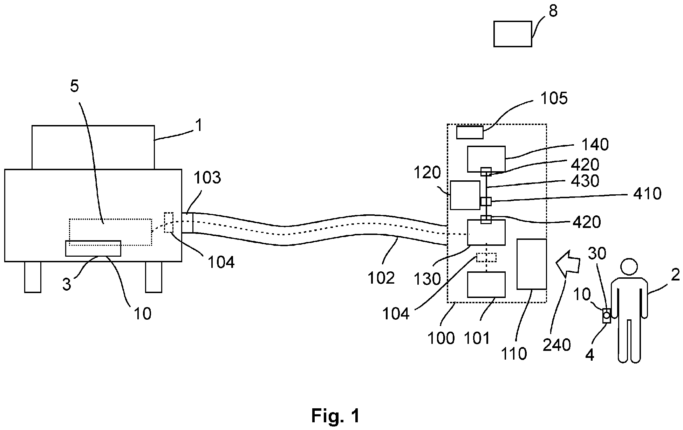

In Figur 1 ist eine erfindungsgemäße Wasserstofftankstelle 100 zur Abgabe eines Wasserstoffs an ein Fahrzeug 1 bei einem durch einen Nutzer 2 initiierten Tankvorgang schematisch und beispielhaft dargestellt.

Um eine zuverlässige Ermittlung der abgegebenen Gasmenge des Wasserstoffs zu ermöglichen, kann die erfindungsgemäße Wasserstofftankstelle 100 einen (beispielsweise geeichten) Gaszähler 130 zum Messen der Menge des Wasserstoffs, d. h. insbesondere des Gasdurchflusses, aufweisen. Ferner kann die Wasserstofftankstelle 100 einen Wasserstofftank 101 aufweisen, welcher die zur Abgabe vorgesehene Wasserstoffmenge lagert. Es kann eine Steuereinheit 140 dafür vorgesehen sein, den Tankvorgang einzuleiten und/oder zu beenden und/oder den Gaszähler 130 zu überwachen und/oder anzusteuern und/oder Ventile 104 der Wasserstofftankstelle 100 anzusteuern. Darüber hinaus kann die Steuereinheit 140 zur Kommunikation mit wenigstens einer zentralen Datenverarbeitungsanlage 8 dienen, um z. B. Daten über den Tankvorgang bei der Datenverarbeitungsanlage 8 zu hinterlegen.

An der Wasserstofftankstelle 100 kann ein Gasschlauch 102 fest angeschlossen sein, welcher dazu ausgebildet ist, die abzugebende Menge des Wasserstoffs zu transportieren. Der Gasdurchfluss in dem Gasschlauch 102 wird hierbei durch eine gestrichelte Linie visualisiert. An einem Ende des Gasschlauches 102 kann ein Zapfventil 103 montiert sein. Mittels des Zapfventils 103 kann das Fahrzeug 1 an die Wasserstofftankstelle 100 zum Auftanken gekoppelt werden. Dies ermöglicht die Abgabe des Wasserstoffs von der Wasserstofftankstelle 100 an einen Fahrzeugtank 5. Verschiedene Ventile 104 können außerdem zur Steuerung des Tankvorgangs vorgesehen sein, und hierzu ggf. durch die Steuereinheit 140 angesteuert werden.

Ferner kann eine Transaktionsvorrichtung 110 zum Bereitstellen einer Transaktionskennung 240 bei der Wasserstofftankstelle 100 vorgesehen sein. Hierzu kann durch die Transaktionsvorrichtung 110 beispielsweise wenigstens eine Eingabeinformation über den Tankvorgang erfasst werden, durch welchen der konkrete Tankvorgang eindeutig identifizierbar ist. Beispielsweise umfasst die Transaktionsvorrichtung 110 einen Zeitgeber, um als eine der Eingabeinformationen eine Zeitinformation bereitzustellen. Weiter kann die Transaktionsvorrichtung 110 einen Datenspeicher und/oder eine Schnittstelle zum Gaszähler und/oder zur Steuereinheit aufweisen, um eine Tankstellenidentitätsinformation 220 als eine der Eingabeinformationen bereitzustellen. Eine weitere Möglichkeit ist, dass eine Identitätsinformation über den Nutzer 2 als eine der Eingabeinformationen dient. Die genannten Eingabeinformationen können z. B. als ein Datensatz kombiniert werden, um als Transaktionskennung 240 verwendet zu werden.

Für eine komfortable Identifizierung kann der Nutzer 2 zur Mitteilung der Identitätsinformation und/oder der Transaktionskennung 240 z. B. ein mobiles (d. h. tragbares) Gerät 4 wie eine Karte 4 oder ein Smartphone 4 mit sich führen. Das mobile Gerät 4 kann eine elektronische Authentifizierungsschnittstelle 30 aufweisen. Die Authentifizierungsschnittstelle 30 dient dabei zum Übertragen der Identitätsinformation und/oder Transaktionskennung 240 an die Wasserstofftankstelle 100, nämlich an die Transaktionsvorrichtung 110. Die Authentifizierungsschnittstelle 30 und Transaktionsvorrichtung 110 können hierzu zur kontaktlosen Datenübertragung ausgebildet sein. Alternativ oder zusätzlich sind auch andere Initiierungs- bzw. Authentifizierungsmittel 10 wie z. B. ein Kennzeichen 3 des Fahrzeuges 1 vorgesehen.

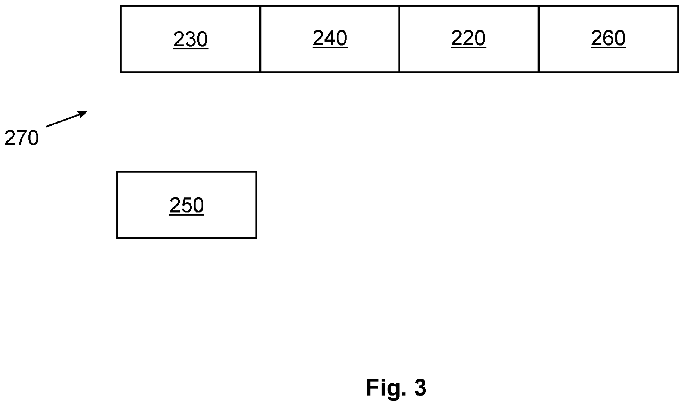

Wie in Figur 3 mit weiteren Einzelheiten gezeigt ist, kann der Gaszähler 130 zum Bereitstellen einer Gasabgabeinformation 230 über die bei dem Tankvorgang abgegebene Gasmenge des Wasserstoffs ausgeführt sein. Ferner kann gemäß Figur 1 und 3 eine Verarbeitungsvorrichtung 120 zum Bereitstellen einer Erfassungsinformation 270 anhand der zuvor bereitgestellten Gasabgabeinformation 230 und Transaktionskennung 240 als ein Teil der Wasserstofftankstelle 100 vorgesehen sein. Die Verarbeitungsvorrichtung 120 fügt beispielsweise die Gasabgabeinformation 230 und die Transaktionskennung 240 zu der Erfassungsinformation 270 in der Form eines Datensatzes zusammen.

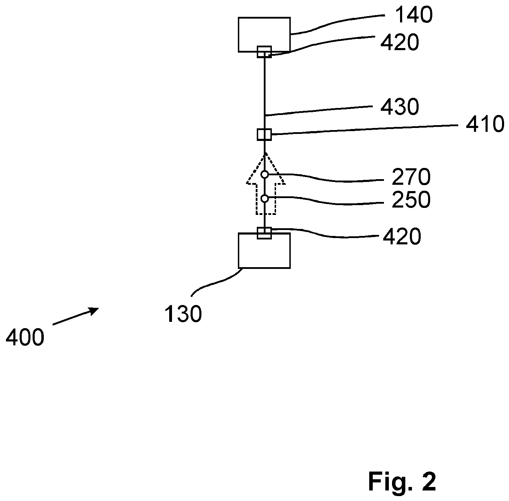

In Figur 1 und mit weiteren Einzelheiten in Figur 2 ist ferner ein Datenübertragungssystem 400 zum Übertragen der auf diese Weise bereitgestellten Erfassungsinformation 270 an eine Steuereinheit 140 der Wasserstofftankstelle 100 gezeigt, um die Gasabgabeinformation 230 zugeordnet zur Transaktionskennung 240 bei der Steuereinheit 140 bereitzustellen. Unter der zugeordneten Bereitstellung kann hierbei verstanden werden, dass bei einer anschließenden Datenverarbeitung festgestellt werden kann, zu welcher Transaktionskennung 240 die Gasabgabeinformation 230 gehört und/oder umgekehrt. Damit wird es möglich, dass diese Informationen der Erfassungsinformation 270 einem konkreten Tankvorgang eindeutig zugeordnet sind. Dies ermöglicht beispielsweise eine spätere Überprüfung des Tankvorgangs.

Die Verarbeitungsvorrichtung 120 ist in Figur 1 schematisch separat dargestellt, kann jedoch auch Teil des Gaszählers 130 und/oder des Datenübertragungssystems 400 und/oder der Steuereinheit 140 sein. Auf diese Weise kann die Erfassungsinformation 270 auch durch den Gaszähler 130 oder auch durch die Steuereinheit 140 bereitgestellt werden, und dann erst an das Datenübertragungssystem 400 übertragen werden. Auch ist es denkbar, dass der Gaszähler 130 zunächst die Gasabgabeinformation 230 an das Datenübertragungssystem 400 überträgt, und dann das Datenübertragungssystem 400 selbst die Erfassungsinformation 270 daraus generiert, also bereitstellt.

Die Steuereinheit 140 und der Gaszähler 130 können zur Übertragung der Erfassungsinformation 270 oder zumindest von Teilen davon (beispielsweise wenigstens einer Information der Erfassungsinformation 270, wie die Gasabgabeinformation 230) jeweils Schnittstellen 420 zum bzw. des Datenübertragungssystems 400 aufweisen. Das Datenübertragungssystem 400 kann eine einzige Datenleitung 430 aufweisen, welche direkt die beiden Schnittstellen 420 miteinander verbindet. Dies ist insbesondere dann sinnvoll, wenn der Gaszähler 130 und die Steuereinheit 140 räumlich nahe beieinander angeordnet sind. Die Wasserstofftankstelle 100 kann allerdings auch als ein System aufgefasst werden, bei welchem der Gaszähler 130 und die Steuereinheit 140 weiter entfernt voneinander angeordnet sind. Somit ist alternativ wenigstens eine Übertragungskomponente 410 zwischengeschaltet, um die Erfassungsinformation 270 gegebenenfalls auch außerhalb der Wasserstofftankstelle 100 über ein Netzwerk oder dergleichen zu übertragen. Somit kann das Datenübertragungssystem 400 auch als ein Gateway ausgeführt sein, bei welchem die wenigstens eine Übertragungskomponente 410 jeweils eine eigene Übertragungselektronik aufweist (z. B. mit wenigstens einem Computer und/oder Mikrocontroller und/oder wenigstens einer eigenen Schnittstelle, wie einer Funkschnittstelle).

Es ist möglich und in Figur 2 und 3 schematisch dargestellt, dass durch die Wasserstofftankstelle 100 wenigstens ein Sicherheitsmerkmal 250 zur Erfassungsinformation 270 erstellt wird. Das Sicherheitsmerkmal 250 ist beispielsweise eine digitale Signatur, und dient zur Absicherung der Erfassungsinformation 270. Das Erstellen des Sicherheitsmerkmals 250 kann zumindest anhand der Gasabgabeinformation 230 und der Transaktionskennung 240, aber auch anhand der vollständigen Erfassungsinformation 270, erfolgen. Somit kann zumindest die Gasabgabeinformation 230 durch das Sicherheitsmerkmal 250 gesichert, insbesondere signiert, bei der Steuereinheit 140 bereitgestellt werden.

Konkret kann das Erstellen des Sicherheitsmerkmals 250 durch ein digitales Signieren zumindest der Gasabgabeinformation 230 und der Transaktionskennung 240, insbesondere der vollständigen Erfassungsinformation 270, durchgeführt werden, um das Sicherheitsmerkmal 250 in der Form einer digitalen Signatur zur Erfassungsinformation 270 zu berechnen. Dies ermöglicht die Prüfung, ob die Gasabgabeinformation 230 inhaltlich korrekt und der richtigen Transaktionskennung 240 zugeordnet ist.

Gemäß Figur 2 kann das Sicherheitsmerkmal 250 vor dem Übertragen an die Steuereinheit 140 erstellt werden, um das Sicherheitsmerkmal 250 zusammen mit der Erfassungsinformation 270 an die Steuereinheit 140 zu übertragen, um zumindest die Gasabgabeinformation 230 durch das Sicherheitsmerkmal 250 gesichert, insbesondere signiert, vom Gaszähler 130 an die Steuereinheit 140 zu übertragen. Das Sicherheitsmerkmal 250 wird in diesem Fall z. B. von dem Gaszähler 130 selbst oder von dem Datenübertragungssystem 400 erstellt.

Ferner kann es gemäß Figur 1 möglich sein, dass die Steuereinheit 140 die übertragene Erfassungsinformation 270, insbesondere zusammen mit dem Sicherheitsmerkmal 250, an eine zentrale Datenverarbeitungsanlage 8 außerhalb der Wasserstofftankstelle 100 übermittelt. Für diese Übermittelung kann eine Kommunikationsschnittstelle 105, wie eine Funkschnittstelle, der Wasserstofftankstelle 100 vorgesehen sein. Damit kann die Gasabgabeinformation 230 zugeordnet zur Transaktionskennung 240, insbesondere gesichert durch das Sicherheitsmerkmal 250, an der zentralen Datenverarbeitungsanlage 8 hinterlegt werden. Weitere Informationen, welche als Teil der Erfassungsinformation 270 gesichert bei der zentralen Datenverarbeitungsanlage 8 hinterlegt werden können, sind gemäß Figur 3 z. B. eine Tankstellenidentitätsinformation 220 als eindeutige Kennzeichnung der Wasserstofftankstelle 100 und/oder eine Zustandsinformation 260 über den Tankvorgang oder auch eine nicht explizit dargestellte Transaktionskennung. Die Zustandsinformation 260 kann für einen Zustand der Wasserstofftankstelle 100 und insbesondere des Gaszählers 130 spezifisch sein.

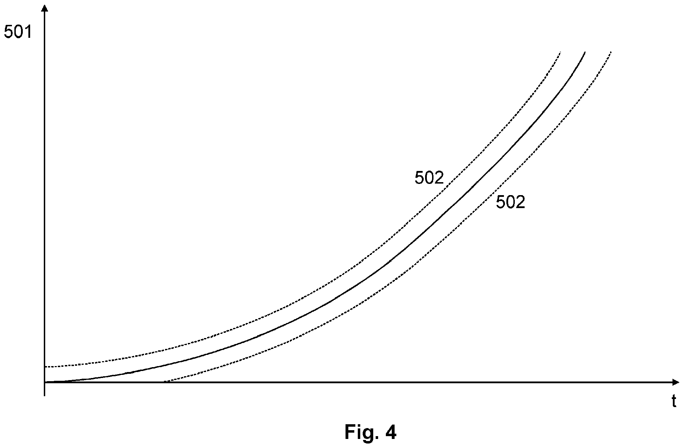

Die Verwendung der Zustandsinformation 260 wird beispielhaft in Figur 4 visualisiert. Dabei kann wiederholt während des Tankvorgangs ein Druck 501 an der Wasserstofftankstelle 100 und insbesondere am Gaszähler 130 gemessen werden, um einen Verlauf (als durchgehende Linie gezeigt) des Drucks 501 über die Zeit t zu erhalten. Ferner können Toleranzbänder 502 mittels vordefinierter Schwellenwerte einen bestimmten Bereich definieren, in welchem Abweichungen des Drucks 501 toleriert werden können. Wenn sich der Druck 501 zu einem Zeitpunkt außerhalb der Toleranzbänder 502 befindet, wird beispielsweise im Rahmen einer Überwachung eine Anomalie festgestellt. Ebenso kann im Rahmen der Überwachung während der Druckmessung auch eine Temperaturmessung erfolgen, und geprüft werden, dass die Temperatur sich nicht von einer idealen Referenztemperatur unterscheidet. Bei einer Abweichung davon kann ebenso die Anomalie bei der Überwachung festgestellt werden. Die Feststellung der Anomalie kann beispielsweise als Warnung in der Erfassungsinformation 270 hinterlegt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Nutzer
- 3: Kennzeichen
- 4: mobiles Gerät, Karte, Smartphone
- 5: Fahrzeugtank
- 8: zentrale Datenverarbeitungsanlage

- 10: Initiierungsmittel, Authentifizierungsmittel

- 30: Authentifizierungsschnittstelle

- 100: Wasserstofftankstelle
- 101: Wasserstofftank
- 102: Gasschlauch
- 103: Zapfventil
- 104: Ventil
- 105: Kommunikationsschnittstelle
- 110: Transaktionsvorrichtung

- 120: Verarbeitungsvorrichtung
- 130: Gaszähler
- 140: Steuereinheit

- 220: Tankstellenidentitätsinformation
- 230: Gasabgabeinformation, Gasdurchflussinformation
- 240: Transaktionskennung
- 250: Sicherheitsmerkmal
- 260: Zustandsinformation
- 270: Erfassungsinformation
- 400: Datenübertragungssystem
- 410: Übertragungskomponente
- 420: Schnittstelle
- 430: Datenleitung

- 501: Druck
- 502: Toleranzband

- t: Zeit

## Patentansprüche

1. Verfahren zur Ermittlung einer an ein Fahrzeug (1) abgegebenen Gasmenge eines Wasserstoffs bei einem durch einen Nutzer (2) initiierten Tankvorgang einer Wasserstofftankstelle (100),
wobei die nachfolgenden Schritte durchgeführt werden:
- Bereitstellen einer Gasabgabeinformation (230) eines Gaszählers (130) über die bei dem Tankvorgang abgegebene Gasmenge,
- Bereitstellen einer Transaktionskennung (240), welche für den initiierten Tankvorgang spezifisch ist,
- Bereitstellen einer Erfassungsinformation (270) anhand der Gasabgabeinformation (230) und der Transaktionskennung (240),
- Übertragen der bereitgestellten Erfassungsinformation (270) an eine Steuereinheit (140) der Wasserstofftankstelle (100), um die Gasabgabeinformation (230) zugeordnet zur Transaktionskennung (240) bei der Steuereinheit (140) bereitzustellen.

2. Verfahren nach Anspruch 1,
**dadurch gekennzeichnet,**
**dass** der nachfolgende Schritt durchgeführt wird:
- Erstellen eines Sicherheitsmerkmales (250), insbesondere einer digitalen Signatur, zumindest anhand der Gasabgabeinformation (230) und der Transaktionskennung (240), insbesondere anhand der vollständigen Erfassungsinformation (270), um zumindest die Gasabgabeinformation (230) durch das Sicherheitsmerkmal (250) gesichert, insbesondere signiert, bei der Steuereinheit (140) bereitzustellen.

3. Verfahren nach Anspruch 2,
**dadurch gekennzeichnet,**
**dass** das Erstellen des Sicherheitsmerkmals (250) durch ein digitales Signieren zumindest der Gasabgabeinformation (230) und der Transaktionskennung (240), insbesondere der vollständigen Erfassungsinformation (270), durchgeführt wird, um das Sicherheitsmerkmal (250) in der Form einer digitalen Signatur zur Erfassungsinformation (270) zu berechnen.

4. Verfahren nach Anspruch 2 oder 3,
**dadurch gekennzeichnet,**
**dass** das Sicherheitsmerkmal (250) vor dem Übertragen an die Steuereinheit (140) erstellt wird, um das Sicherheitsmerkmal (250) zusammen mit der Erfassungsinformation (270) an die Steuereinheit (140) zu übertragen, um zumindest die Gasabgabeinformation (230) durch das Sicherheitsmerkmal (250) gesichert, insbesondere signiert, vom Gaszähler (130) an die Steuereinheit (140) zu übertragen.

5. Verfahren nach einem der Ansprüche 2 bis 4,
**dadurch gekennzeichnet,**
**dass** das Übertragen der Erfassungsinformation (270) durch ein Datenübertragungssystem (400) durchgeführt wird, wobei das Erstellen des Sicherheitsmerkmals (250) durch das Datenübertragungssystem (400) außerhalb des Gaszählers (130) erfolgt und/oder dass das Bereitstellen der Transaktionskennung (240) und/oder das Bereitstellen der Erfassungsinformation (270) und/oder das Erstellen des Sicherheitsmerkmals (250) durch den Gaszähler (130) durchgeführt wird.

6. Verfahren nach einem der vorhergehenden Ansprüche,
**dadurch gekennzeichnet,**
**dass** das Bereitstellen der Transaktionskennung (240) und/oder das Bereitstellen der Erfassungsinformation (270) und/oder das Erstellen des Sicherheitsmerkmals (250) durch die Steuereinheit (140) durchgeführt wird und/oder dass zum Bereitstellen der Transaktionskennung (240) die Transaktionskennung (240), insbesondere pseudozufällig, anhand der Initiierung des Tankvorgangs generiert wird.

7. Verfahren nach einem der vorhergehenden Ansprüche,
**dadurch gekennzeichnet,**
**dass** zum Bereitstellen der Transaktionskennung (240) der nachfolgende Schritt durchgeführt wird, um die Transaktionskennung (240) anhand der Initiierung des Tankvorgangs zu generieren:
- Erstellen der Transaktionskennung (240) bei oder nach der Initiierung des Tankvorgangs zumindest anhand eines Initiierungsmittels (10) zur Initiierung des Tankvorgangs und/oder einer Zeitinformation über den Tankvorgang und/oder einer Tankstellenidentitätsinformation, wobei insbesondere das Initiierungsmittel (10) durch den Nutzer (2) dazu verwendet wird, den Tankvorgang zu initiieren, wobei das Initiierungsmittel (10) als ein, insbesondere elektronisches, Zahlungsmittel ausgebildet ist.

8. Verfahren nach Anspruch 7,
**dadurch gekennzeichnet,**
**dass** die Zeitinformation als ein Zeitstempel des Tankvorgangs ausgeführt ist, welcher bei oder nach der Initiierung des Tankvorgangs festgelegt wird, und die Tankstellenidentitätsinformation eine Information zur Identifizierung der Wasserstofftankstelle (100) umfasst.

9. Verfahren nach einem der Ansprüche 7 bis 8,
**dadurch gekennzeichnet,**
**dass** der Tankvorgang dadurch von dem Nutzer (2) initiiert wird, dass das Initiierungsmittel (10) durch den Nutzer (2) an der Wasserstofftankstelle (100) bereitgestellt wird, und das bereitgestellte Initiierungsmittel (10) von der Wasserstofftankstelle (100) erfasst wird, um die Transaktionskennung (240) zu erstellen.

10. Verfahren nach einem der vorhergehenden Ansprüche,
**dadurch gekennzeichnet,**
**dass** die Gasabgabeinformation (230) wenigstens eine der nachfolgenden Informationen umfasst:
- Einen Zählerstand des Gaszählers (130),
- Einen Anfangszählerstand des Gaszählers (130) zu Beginn des Tankvorgangs,
- Einen Endzählerstand des Gaszählers (130) am Ende des Tankvorgangs,
- Die an das Fahrzeug (1) während des Tankvorgangs abgegebene Gasmenge.

11. Verfahren nach einem der vorhergehenden Ansprüche,
**dadurch gekennzeichnet,**
**dass** die Steuereinheit (140) die übertragene Erfassungsinformation (270), insbesondere zusammen mit einem Sicherheitsmerkmal (250), an eine zentrale Datenverarbeitungsanlage (8) außerhalb der Wasserstofftankstelle (100) übermittelt, um die Gasabgabeinformation (230) zugeordnet zur Transaktionskennung (240), insbesondere gesichert durch das Sicherheitsmerkmal (250), an der zentralen Datenverarbeitungsanlage (8) zu hinterlegen, und/oder dass zum Bereitstellen der Gasabgabeinformation (230), vorzugsweise bei einer Messung eines Gasdurchflusses durch den Gaszähler (130), wenigstens ein Übertragungsverlust der Abgabe der Gasmenge berücksichtigt wird.

12. Verfahren nach einem der vorhergehenden Ansprüche,
**dadurch gekennzeichnet,**
**dass** die Erfassungsinformation (270) eine Zustandsinformation (260) über den Tankvorgang aufweist, wobei die Zustandsinformation (260) für einen Zustand der Wasserstofftankstelle (100) und insbesondere des Gaszählers (130) spezifisch ist.

13. Wasserstofftankstelle (100) zur Abgabe eines Wasserstoffs an ein Fahrzeug (1) bei einem durch einen Nutzer (2) initiierten Tankvorgang, umfassend:
- Einen Gaszähler (130) zum Bereitstellen einer Gasabgabeinformation (230) über die bei dem Tankvorgang abgegebene Gasmenge des Wasserstoffs,
- Eine Transaktionsvorrichtung (110) zum Bereitstellen einer Transaktionskennung (240), welche für den initiierten Tankvorgang spezifisch ist,
- Eine Verarbeitungsvorrichtung (120) zum Bereitstellen einer Erfassungsinformation (270) anhand der Gasabgabeinformation (230) und der Transaktionskennung (240),
- Wenigstens eine Schnittstelle (420) zu einem Datenübertragungssystem (400) zum Übertragen der bereitgestellten Erfassungsinformation (270) an eine Steuereinheit (140) der Wasserstofftankstelle (100), um die Gasabgabeinformation (230) zugeordnet zur Transaktionskennung (240) bei der Steuereinheit (140) bereitzustellen.

14. Wasserstofftankstelle (100) nach Anspruch 13,
**dadurch gekennzeichnet,**
**dass** die Wasserstofftankstelle (100) zur Ausführung der Schritte eines Verfahrens nach einem der Ansprüche 1 bis 12 ausgeführt ist.

15. Computerprogramm, umfassend Befehle, die bei einer Ausführung des Computerprogramms durch eine Verarbeitungsvorrichtung (120) einer Wasserstofftankstelle (100) die Wasserstofftankstelle (100) veranlassen, die Schritte eines Verfahrens nach einem der Ansprüche 1 bis 12 auszuführen.
